# EUROPEAN PATENT APPLICATION

(11) **EP 4 703 249 A1**
(43) Date of publication of application: **04.03.2026**
(21) Application number: 25198317.7
(22) Date of filing: 27.08.2025
(51) Int. Cl.: B62J 43/16, B62J 43/28, B62K 11/04, B62K 25/28, B62M 7/04, B62J 35/00

(54) **MOTORCYCLE**

(30) Priority: 27.08.2024 JP 2024145734
(71) Applicant: Kawasaki Motors, Ltd., Akashi, Hyogo 673-8666 (JP)
(72) Inventor: TAKEUCHI, Hiroshi, Akashi-shi, Hyogo, 673-8666 (JP)
(74) Representative: Hoefer & Partner Patentanwälte mbB

(57) **Abstract**

There is provided a motorcycle including: an engine (E) that is a drive source; a battery (60) arranged rearward of the engine (E) and charged by power of the engine (E); a pair of left and right swing arms (24) supporting a rear wheel (26); and a fuel tank (44, 40) arranged above the battery (60). In a plan view, the battery (60) is arranged between the left and right swing arms (24), and at least a part of the battery (60) overlaps the fuel tank (44, 40).

## Description

### TECHNICAL FIELD

The present disclosure relates to an arrangement of a battery and a fuel tank of a motorcycle including an engine as a drive source.

### BACKGROUND ART

A motorcycle including an engine as a drive source includes a fuel tank that stores fuel of the engine, a battery that is charged by power of the engine, and the like (for example, WO2023/127075A1).

In such a motorcycle, various devices such as the engine, the fuel tank, and the battery are mounted in a limited space, and it is difficult to ensure arrangement spaces for the devices.

In particular, when a heavy object such as the fuel tank and the battery is mounted on the motorcycle, it is required to reduce an influence on a motion performance of the motorcycle.

### SUMMARY OF INVENTION

The present disclosure provides a motorcycle in which an engine, a fuel tank, and a battery can be integrated in a vicinity of a center of gravity of the motorcycle.

According to an illustrative aspect of the present disclosure, a motorcycle includes: an engine that is a drive source; a battery arranged rearward of the engine and charged by power of the engine; a pair of left and right swing arms supporting a rear wheel; and a fuel tank arranged above the battery. In a plan view, the battery is arranged between the left and right swing arms, and at least a part of the battery overlaps the fuel tank. Here, "battery" includes a low-voltage battery of an electrical system and a medium-voltage/high-voltage battery of a drive system.

According to the motorcycle of the present disclosure, the battery is arranged between left and right swing arms rearward of the engine, and the fuel tank is arranged above the battery. Accordingly, the fuel tank and the battery can be arranged in a limited space of the motorcycle. Since the engine, the fuel tank, and the battery are integrated in the vicinity of the center of gravity of the motorcycle, an influence on the motion performance of the motorcycle can be reduced.

### BRIEF DESCRIPTION OF DRAWINGS

FIG. 1 is a right side view illustrating a motorcycle according to a first embodiment of the present disclosure;
FIG. 2 is a left side view illustrating the same motorcycle;
FIG. 3 is a plan view illustrating the same motorcycle; and
FIG. 4 is an enlarged side view of a main part of FIG. 1.

### DESCRIPTION OF EMBODIMENTS

Hereinafter, a preferred embodiment of the present disclosure will be described with reference to the drawings. In the present description, "right" and "left" refer to "right" and "left" as viewed from a driver who drives a vehicle. That is, a left-right direction coincides with a vehicle width direction. In addition, "front" and "rear" refer to "front" and "rear" in a traveling direction of the vehicle. That is, a longitudinal direction of a vehicle body coincides with a front-rear direction of the vehicle. In the vehicle width direction, an inner side in the vehicle width direction refers to a side toward a center line of the vehicle body that extends in the front-rear direction, and an outer side in the vehicle width direction refers to a side away from the center line of the vehicle body.

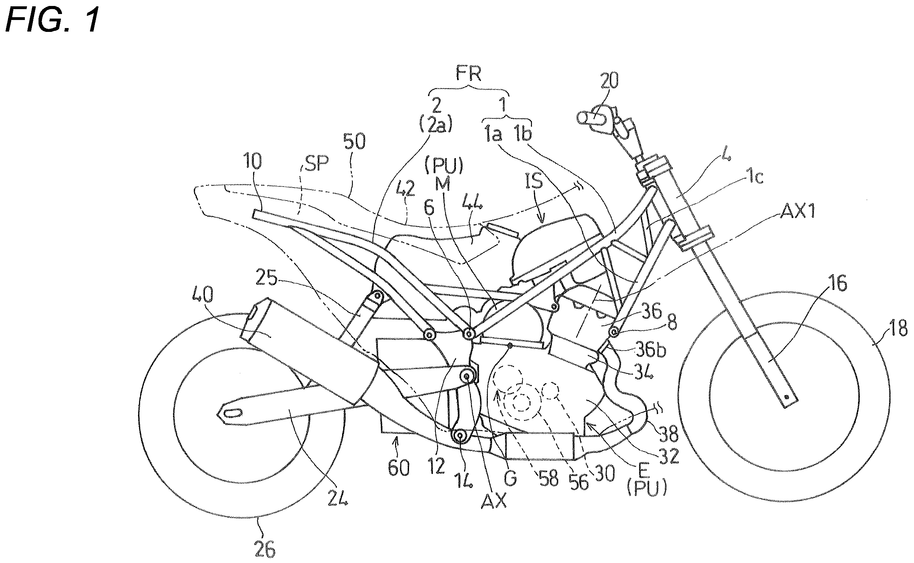

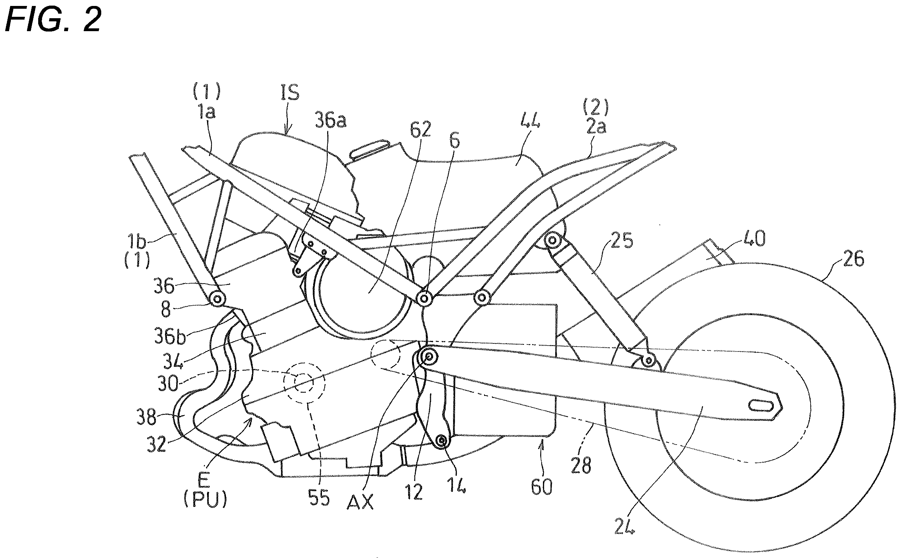

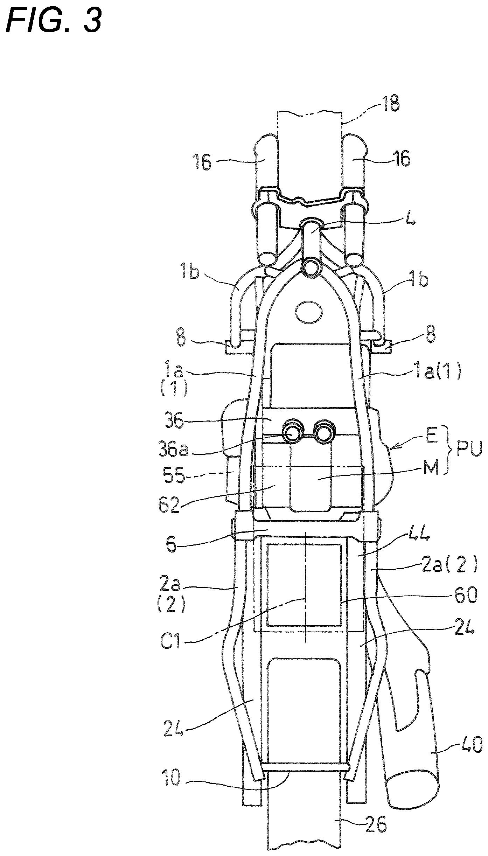

FIG. 1 is a right side view illustrating a motorcycle according to a first embodiment of the present disclosure, FIG. 2 is a left side view of the motorcycle, and FIG. 3 is a plan view of the motorcycle. As illustrated in FIG. 1, the motorcycle according to the present embodiment includes a power unit PU including an internal combustion engine E as a first drive source and an electric motor M as a second drive source. That is, the motorcycle according to the present embodiment may travel by the engine E only, which is an internal combustion engine, by the electric motor M only, or by the engine E and the electric motor M at the same time, depending on a riding mode.

In the present embodiment, a vehicle body frame FR of the motorcycle is a frame structure in which frame members are connected by welding. The vehicle body frame FR includes a main frame 1 constituting a front half portion and a rear frame 2 constituting a rear half portion. The main frame 1 extends obliquely downward and rearward from a head pipe 4 at a front end. The rear frame 2 extends obliquely upward and rearward from a rear end portion of the main frame 1.

The main frame 1 includes a first frame piece 1a extending rearward from an upper portion of the head pipe 4 and a second frame piece 1b extending rearward from a lower portion of the head pipe 4. The main frame 1 further includes a plurality of reinforcing frame pieces 1c coupling the first frame piece 1a with the second frame piece 1b.

As illustrated in FIG. 3, the first frame piece 1a and the second frame piece 1b are provided in left and right pairs. The left and right first frame pieces 1a, 1a are coupled by a first cross frame 6, which extends in the vehicle width direction, at rear ends thereof. Each second frame piece 1b is provided with an engine mount portion 8 at a rear end thereof. The engine mount portion 8 in the present embodiment is a cylindrical member having an axis in the vehicle width direction.

The rear frame 2 is coupled to the first cross frame 6 at a front end and extends rearward from the first cross frame 6. The rear frame 2 also includes a pair of left and right rear frame pieces 2a, 2a. The left and right rear frame pieces 2a, 2a are coupled by a second cross frame 10, which extends in the vehicle width direction, at rear ends thereof.

As illustrated in FIG. 1, a pivot frame 12 constituting a part of the vehicle body frame FR is coupled to the rear end portion of the main frame 1. The pivot frame 12 is formed of a plate material extending in an upper-lower direction, and is provided in pair. The left and right pivot frames 12 are coupled to the first cross frame 6 at upper end portions thereof, and are coupled to a third cross frame 14, which extends in the vehicle width direction, at lower end portions thereof.

The head pipe 4 supports a front fork 16. The front fork 16 supports a front wheel 18 at a lower end portion thereof, and is attached to a handle 20 at an upper end portion thereof. The pivot frame 12 supports a pair of left and right swing arms 24 in a vertically swingable manner. The swing arms 24 are attached to a rear wheel 26 at rear end portions thereof. The swing arms 24 support the rear wheel 26 on the vehicle body frame FR such that the rear wheel 26 is swingable about a swing axis AX.

A rear suspension 25 is bridged between the swing arms 24 and the rear frame 2. The rear suspension 25 in the present embodiment includes so-called two suspensions. That is, the pair of left and right rear suspensions 25 are bridged between the left and right swing arms 24 and the left and right rear frame pieces 2a, respectively.

An engine E is arranged between the front wheel 18 and the rear wheel 26 below the main frame 1. Power of the engine E is transmitted to the rear wheel 26 via a power transmission member 28 illustrated in FIG. 2, so that the rear wheel 26 is driven. The power transmission member 28 is, for example, a drive chain. However, the power transmission member 28 is not limited to the drive chain, and may be, for example, a toothed belt.

As illustrated in FIG. 1, the engine E includes a crankshaft 30 extending in the vehicle width direction, a crankcase 32 supporting the crankshaft 30, a cylinder 34 protruding upward from the crankcase 32, and a cylinder head 36 coupled to an upper portion of the cylinder 34. In the present embodiment, the cylinder 34 and the cylinder head 36 have an axis AX1 inclined upward and forward. In the present embodiment, the engine E including the crankcase 32, the cylinder 34, and the cylinder head 36 has a substantially L shape in a side view.

The engine is supported by the vehicle body frame FR. Specifically, a front portion of the cylinder head 36 is supported by the engine mount portion 8, and a rear portion of the cylinder head 36 is supported by the first frame piece 1a of the main frame 1. Further, a rear end portion of the crankcase 32 is supported by the pivot frame 12 in two upper and lower positions. A support structure of the engine E is not limited thereto.

As shown in FIG. 3, the cylinder head 36 is formed with an intake port 36a in a rear surface thereof and an exhaust port 36b in a front surface thereof. The intake port 36a is connected to an intake device IS. The intake device IS supplies outside air as intake air to the intake port 36a, and includes an air cleaner, a throttle body, and the like.

The exhaust port 36b is connected to an exhaust pipe 38. The exhaust pipe 38 extends rearward below the engine E and is connected to an exhaust muffler 40 on a right side of the rear wheel 26. The exhaust muffler 40 muffles exhaust from the exhaust pipe 38 and discharges the exhaust to an outside.

The motorcycle further includes a seat 42 on which a driver sits, and a fuel tank 44 in which fuel for the engine E is stored. The fuel tank 44 is arranged rearward of the engine E and below the seat 42. That is, the fuel tank 44 is arranged in a vicinity of a center of gravity G of the vehicle body. Specifically, the fuel tank 44 is arranged between the left and right rear frame pieces 2a, 2a in a plan view of FIG. 3. As illustrated in FIG. 1, the seat 42 is arranged above the intake device IS and the fuel tank 44.

The motorcycle according to the present embodiment includes a resin cowling 50, which is indicated by a two-dot chain line and covers the vehicle body from the outside.

As illustrated in FIG. 2, a generator 55 is provided on one side that is one end in an axial direction of the crankshaft 30, in the present embodiment, on a left side. The generator 55 according to the present embodiment is a generator (ISG) having a starter motor function. The generator 55 generates electric power by the power of the engine E, that is, by rotation of the crankshaft 30.

As illustrated in FIG. 1, a clutch 56 is provided on the other side that is the other end in the axial direction of the crankshaft 30, in the present embodiment, on a right side. The clutch 56 switches between transmitting and interrupting the rotation of the crankshaft 30.

The crankcase 32 accommodates therein a transmission 58 in a region rearward of the crankshaft 30. That is, a rear portion of the crankcase 32 constitutes a transmission case that accommodates the transmission 58. The crankshaft 30 is connected to an input shaft of the transmission 58 via the clutch 56, and the power transmission member 28 is connected to an output shaft of the transmission 58. That is, the rotation of the crankshaft 30 is shifted by the transmission 58 and then transmitted to the rear wheel 26.

Above the crankcase 32 and rearward of the cylinder 34, the electric motor M is arranged. Specifically, the electric motor M is arranged above the crankcase 32, and is arranged forward of a rear end of the crankcase 32 and rearward of the cylinder 34. An output shaft of the electric motor M is connected to the input shaft of the transmission 58. That is, rotation of the output shaft of the electric motor M is shifted by the transmission 58 and then transmitted to the rear wheel 26.

When the rotation of the output shaft of the electric motor M is transmitted to the input shaft of the transmission 58 downstream of the clutch 56, the power of the electric motor M is transmitted as a traveling drive force. When the clutch 56 is disengaged, traveling can be made by the electric motor alone. When the clutch 56 is engaged, traveling can be made by using both the electric motor M and the engine E. When the clutch 56 is engaged and the electric motor M is stopped, traveling can made by the engine alone.

As illustrated in FIG. 2, the motorcycle according to the present embodiment includes a drive battery 60 that drives the electric motor M, and an inverter 62 that supplies an output of the generator 55 to the drive battery 60. The drive battery 60 according to the present embodiment is a medium-voltage battery of a drive system, and is specifically a 48 V lithium-ion battery. The drive battery 60 is not limited thereto, and may be, for example, a high-voltage battery of a drive system.

The inverter 62 according to the present embodiment is a DC/DC converter integrated inverter. That is, the inverter 62 according to the present embodiment supplies the output of the generator 55 to the 48 V drive battery 60, and also supplies the output to a control power supply battery having a lower voltage than the drive battery 60. The control power supply battery is a low-voltage battery of an electrical system, and is, for example, a 12 V lead storage battery.

In the present embodiment, the inverter 62 is arranged side by side with the electric motor M in the vehicle width direction above the engine E. The inverter 62 is arranged on an opposite side from the exhaust muffler 40 in the vehicle width direction relative to a central axis C1 extending in the front-rear direction of the vehicle body. That is, the inverter 62 is arranged on the left side of the vehicle body, and the exhaust muffler 40 is arranged on the right side of the vehicle body. In the present embodiment, the engine E is shifted to the right side of the vehicle body relative to the central axis C1 of the vehicle body, and the inverter 62 is arranged in an empty space on the left side.

The output of the generator 55 is supplied to the drive battery 60 via the inverter 62, and the drive battery 60 is charged. Specifically, the generator 55 is an AC generator, and the output thereof is converted into DC power by the inverter 62 and supplied to the drive battery 60. The electric power charged to the drive battery 60 is supplied to the electric motor M to drive the electric motor M.

In an electric and hybrid riding mode, a drive force of the electric motor M is transmitted to the rear wheels 26 via the power transmission member 28. When the engine is started, electric power is supplied from the drive battery 60 to the generator 55, and the generator 55 functions as a starter.

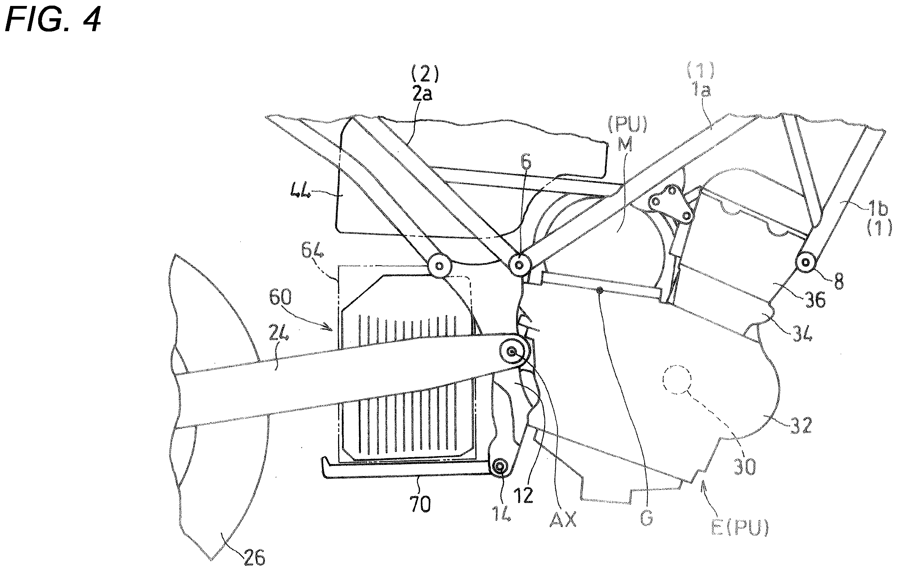

The drive battery 60 is arranged in the vicinity of the center of gravity G of the vehicle body. Specifically, the drive battery 60 is arranged rearward of the swing axis AX between the engine E and the rear wheel 26 in the front-rear direction. The drive battery 60 is arranged between the left and right swing arms 24, 24 in the plan view illustrated in FIG. 3. A part of the drive battery 60 overlaps the swing arms 24 in a side view illustrated in FIG. 4. The drive battery 60 is arranged below the fuel tank 44. Specifically, at least a part of the drive battery 60 may overlap the fuel tank 44 in the plan view of FIG. 3. In FIG. 3, the fuel tank 44 is illustrated by a two-dot chain line.

In the present embodiment, as illustrated in FIG. 4, the drive battery 60 is arranged such that a longitudinal direction thereof is along the upper-lower direction. In the upper-lower direction, an upper end of the drive battery 60 is at substantially the same height as an upper end of the rear portion of the crankcase 32, that is, an upper end of the transmission case. A lower end portion of the drive battery 60 is located below the swing arms 24 and has substantially the same height as a lower end of the engine E.

A front end of the drive battery 60 is located in substantially the same position as a rear end of the pivot frame 12 in the front-rear direction. In the present embodiment, a part of the front end of the drive battery 60 overlaps the rear end portion of the pivot frame 12 in a side view. A rear end of the drive battery 60 is in substantially the same position as a rear end of the fuel tank 40.

The drive battery 60 according to the present embodiment is accommodated in a battery case 64. The battery case 64 according to the present embodiment has a rectangular box shape with an upper side open, and the drive battery 60 is accommodated therein. The battery case 64 is made of metal, for example, an aluminum alloy. The shape and the material of the battery case 64 are not limited thereto.

A stand 70 that supports the vehicle body during parking and stopping is arranged on the left side of the vehicle body. The stand 70 according to the present embodiment is a center stand that supports the vehicle body in an upright state, and is accommodated to be parallel to the vehicle body during storage, and protrudes downward during parking and stopping.

The stand 70 has a front end portion thereof pivotably supported by the third cross frame 14. That is, the stand 70 pivots relative to the third cross frame 14 and is switched between a stored state and a parking and stopping state. In the present embodiment, the stand 70 extends in the front-rear direction below the drive battery 60 in a state of being accommodated on the vehicle body.

According to the above configuration, the drive battery 60 is arranged between the left and right swing arms 24, 24 rearward of the engine E, and the fuel tank 44 is arranged above the drive battery 60. Accordingly, the fuel tank 44 and the drive battery 60 can be arranged in a limited space of the motorcycle. Since the engine E, the fuel tank 44, and the drive battery 60 are integrated in the vicinity of the center of gravity G of the vehicle, an influence on a motion performance of the motorcycle can be reduced.

In the present embodiment, the drive battery 60 is a medium-voltage/high-voltage battery that drives the electric motor M that is a drive source of the vehicle. That is, the drive battery 60 is larger and heavier than a low-voltage control power supply battery of an electrical system. Therefore, according to the above configuration, since the engine E, the fuel tank 44, the electric motor M, and the drive battery 60 are integrated in the vicinity of the center of gravity G of the vehicle, the influence on the motion performance of the motorcycle can be particularly reduced.

Instead of the medium-voltage/high-voltage drive battery 60 that drives the electric motor M, a low-voltage control power supply battery of an electrical system may be arranged between the left and right swing arms 24, 24, and the fuel tank 44 may be arranged above the control power supply battery. In this case, the drive source of the vehicle may be only the engine E.

In the present embodiment, as illustrated in FIG. 1, the fuel tank 44 is arranged below the seat 42. According to this configuration, since the drive battery 60 is arranged between the left and right swing arms 24, 24 and the fuel tank 44 is arranged above the drive battery 60 and below the seat 42, the drive battery 60 and the fuel tank 44 can be arranged.

In the present embodiment, as illustrated in FIG. 3, the fuel tank 44 is arranged between the pair of left and right rear frame pieces 2a, 2a. According to this configuration, the fuel tank 44 can be arranged and extend downward to increase a capacity thereof.

In the present embodiment, as shown in FIG. 4, the lower portion of the fuel tank 44 extends downward in shape from a front portion to a rear portion of the fuel tank 44. The vertical length of the rear portion of the fuel tank 44 is longer than that of the front portion of the fuel tank 44.

The front portion of the fuel tank 44, which has a shorter vertical length, is positioned above the electric motor M, whereas the rear portion of the fuel tank 44, which has a longer vertical length, is positioned above the drive battery 60. Furthermore, the lower end of the rear portion of the fuel tank 44 is positioned lower than the upper end of the electric motor M.

According to the above configuration, the mass of the motorcycle as a whole is concentrated, thereby minimizing the influence on the motion performance of the motorcycle and improving the handling stability of the motorcycle.

In the present embodiment, as illustrated in FIG. 4, the drive battery 60 is arranged such that the longitudinal direction thereof is along the upper-lower direction. According to this configuration, the drive battery 60 can be arranged by effectively using a space between the left and right swing arms 24, 24 while preventing a long wheelbase.

In the present embodiment, the lower end portion of the drive battery 60 is located below the swing arms 24 in a side view. According to this configuration, by arranging the drive battery 60 in a low position, the space between the left and right swing arms 24, 24 can be effectively used to arrange the large drive battery 60 elongated in the upper-lower direction. By arranging the drive battery 60 in a low position, it is further possible to ensure a space for arranging the fuel tank 44 above the drive battery 60.

In the present embodiment, the stand 70 extends in the front-rear direction below the drive battery 60 in a state of being accommodated on the vehicle body. According to this configuration, the stand 70 can be arranged by effectively using a space below the drive battery 60. Since the stand 70 is arranged below the drive battery 60, the drive battery 60 can be protected from obstacles, scattered objects, and the like during traveling.

The motorcycle of the present disclosure includes following aspects 1 to 7.

According to an aspect 1 of the present disclosure, a motorcycle include: an engine that is a drive source; a battery arranged rearward of the engine and charged by power of the engine; a pair of left and right swing arms supporting a rear wheel; and a fuel tank arranged above the battery, in which in a plan view, the battery is arranged between the left and right swing arms, and at least a part of the battery overlaps the fuel tank.

According to an aspect 2 of the present disclosure, the motorcycle according to aspect 1, further includes: an electric motor that is another drive source in addition to the engine, in which the battery is a drive battery that drives the electric motor.

According to an aspect 3 of the present disclosure, the motorcycle according to aspect 1 or 2, further includes: a seat allowing a driver to sit, in which the fuel tank is arranged below the seat.

According to an aspect 4 of the present disclosure, the motorcycle according to any one of aspects 1 to 3, further includes: a vehicle body frame supporting the engine, in which the vehicle body frame includes a pair of left and right frame pieces, and the fuel tank is arranged between the pair of left and right frame pieces.

According to an aspect 5 of the present disclosure, in the motorcycle according to any one of aspects 1 to 4, a lower end portion of the battery is located below the swing arms in a side view.

According to an aspect 6 of the present disclosure, in the motorcycle according to any one of aspects 1 to 5, the battery is arranged such that a longitudinal direction of the battery is along an upper-lower direction.

According to an aspect 7 of the present disclosure, the motorcycle according to any one of aspects 1 to 6, further includes: a stand that supports a vehicle body during parking and stopping, in which the stand extends in a front-rear direction below the battery in a state of being accommodated on the vehicle body.

The present disclosure is not limited to the above embodiment, and various additions, modifications, and deletions can be made without departing from the gist of the present disclosure. For example, in the above embodiment, the fuel tank 44 is arranged between the left and right rear frame pieces 2a, 2a, and the fuel tank 44 may also be arranged above the rear frame pieces 2a. With a lower end of the fuel tank 44 in a low position, a capacity of the tank is increased and a center of gravity is also in a low position. Therefore, such a configuration is also included in the scope of the present disclosure.

## Claims

1. A motorcycle comprising:
an engine (E) that is a drive source;
a battery (60) arranged rearward of the engine (E) and charged by power of the engine (E);
a pair of left and right swing arms (24) supporting a rear wheel (26); and
a fuel tank (44) arranged above the battery (60), wherein
in a plan view, the battery (60) is arranged between the left and right swing arms (24), and at least a part of the battery (60) overlaps the fuel tank (44).

2. The motorcycle according to claim 1, further comprising:
an electric motor (M) that is another drive source in addition to the engine (E), wherein
the battery (60) is a drive battery (60) that drives the electric motor (M).

3. The motorcycle according to claim 1 or 2, further comprising:
a seat (42) allowing a driver to sit, wherein
the fuel tank (44) is arranged below the seat (42).

4. The motorcycle according to any one of claims 1 to 3, further comprising:
a vehicle body frame (FR) supporting the engine (E), wherein
the vehicle body frame (FR) includes a pair of left and right frame pieces (2a), and
the fuel tank (44) is arranged between the pair of left and right frame pieces (2a).

5. The motorcycle according to any one of claims 1 to 4, wherein
a lower end portion of the battery (60) is located below the swing arms (24) in a side view.

6. The motorcycle according to any one of claims 1 to 5, wherein
the battery (60) is arranged such that a longitudinal direction of the battery (60) is along an upper-lower direction.

7. The motorcycle according to any one of claims 1 to 6, further comprising:
a stand (70) that supports a vehicle body during parking and stopping, wherein
the stand (70) extends in a front-rear direction below the battery (60) in a state of being accommodated on the vehicle body.
